# EUROPÄISCHE PATENTANMELDUNG

(11) **EP 2 860 659 A1**
(43) Veröffentlichungstag der Anmeldung: **15.04.2015**
(21) Anmeldenummer: 13187786.2
(22) Anmeldetag: 08.10.2013
(51) Int. Cl.: G06F 21/60

(54) **Vereinfachung der Authentifizierung von Anwendern und der Identifizierung von Zieldrucken**

(71) Anmelder: Suchy MIPS, 81929 München (DE)
(72) Erfinder: Suchy, Waldemar, 81929 München (DE)
(74) Vertreter: Lermer, Christoph

(57) **Zusammenfassung**

Ein System bzw. ein Netzwerk gemäß der vorliegenden Erfindung umfasst einen Server 1 sowie eine Vielzahl von Druckern 21, 22, 23. Das dargestellte Netzwerk umfasst außerdem netzwerkwerkfähige mobile Geräte 41, 42. Jeder der Drucker 21, 22, 23 weist erfindungsgemäß ein im Netzwerk eindeutig erkennbares und durch ein Mobilgerät lesbares Erkennungsmerkmal 210, 220 bzw. 230 auf, das von den registrierten mobilen Geräten 41, 42 erfasst und zusammen mit der Gerätekennung als Signal S an den Server 1 weitergegeben wird, um einen Druckauftrag für eine im Server 1 gespeicherte Druckanfrage zu erzeugen. Der Server 1 erzeugt nach einer Authentifizierung des Benutzers des mobilen Geräts 42 und einer Identifikation des Druckers 21 anhand des Signals S den Druckauftrag D für diesen Drucker 21.

## Beschreibung

### TECHNISCHES GEBIET

Diese Erfindung betrifft ein System zum Drucken einer Datei, umfassend ein Netzwerk mit wenigstens einem Server, wenigstens einem mobilen Gerät, und einer Anzahl von Druckern. Außerdem betrifft die Erfindung ein Verfahren zum Drucken einer Datei, insbesondere in einem System wie oben genannt, umfassend die Übermittlung einer Druckanfrage an einen Server.

### STAND DER TECHNIK

In sogenannten Follow-Me-Systemen werden Druckaufträge (bzw. Druckanfragen) auf einem Server zwischengespeichert, um später ausgedruckt zu werden. Dazu muss der berechtigte Benutzer sich an einem ausgewählten Druckgerät anmelden und von dort aus den Druckauftrag erteilen. Dabei ist in der Regel eine Authentifizierung des Benutzers erforderlich, um sicherzustellen, dass kein Unberechtigter einen Druckauftrag für gespeicherte Druckanfragen eines berechtigten Benutzers platziert.

Die Authentifizierung kann auf verschiedene Weise erfolgen, beispielsweise durch eine Chipkarte, Magnetkarte, o. ä., möglicherweise in Kombination mit der Eingabe eines Passworts, das nur dem berechtigten Benutzer bekannt ist. Abgesehen davon, dass dieses Verfahren das Mitführen eines Identifikationsnachweises und/oder die Erinnerung an ein Passwort erfordert, müssen sämtliche in das System integrierte Drucker mit einer entsprechenden Zugangskontrolle bzw. elektronischen Authentifizierungsgeräten, wie z. B. Magnetkartenlesern, ausgestattet sein. Dies erhöht, insbesondere bei einer Vielzahl von Druckern, die Gesamtkosten des Drucksystems erheblich.

### AUFGABE DER ERFINDUNG

Ausgehend davon besteht die Aufgabe der vorliegenden Erfindung darin, ein System und ein Verfahren für das Drucken von Dateien zur Verfügung zu stellen, welche die Authentifizierung von Anwendern und die Identifizierung eines Zieldruckers vereinfachen.

### TECHNISCHE LÖSUNG

Diese Aufgabe wird gelöst durch ein System nach Anspruch 1, ein Verfahren nach Anspruch 7 und ein Datenverarbeitungsprogramm nach Anspruch 15. Bevorzugte Merkmale der Erfindung ergeben sich aus den abhängigen Ansprüchen.

Ein erfindungsgemäßes System zum Drucken einer Datei umfasst ein Netzwerk mit wenigstens einem Server, wenigstens einem mobilen Gerät, und einer Anzahl von Druckern. Die Drucker weisen jeweils ein im System individuelles Erkennungsmerkmal auf, das durch das mobile Gerät auslesbar ist. Vorzugsweise ist das Erkennungsmerkmal jeweils am zugehörigen Drucker angebracht.

Eine Hauptidee der Erfindung besteht darin, zur Identifizierung und Authentifizierung eines Benutzers ein netzwerkfähiges, mobiles Gerät, wie z. B. ein Smartphone, mobiles Telefon, i-Pad, o. ä., einzusetzen, das der Benutzer des Systems ohnehin mit sich führt. Die Anmeldung des Benutzers erfolgt dabei am mobilen Gerät, meist unabhängig von dem Wunsch, einen Druckauftrag zu platzieren. Die Authentifizierung am mobilen Gerät kann zwar als Teil des Verfahrens angesehen werden, jedoch kann die Authentifizierung unabhängig von den übrigen Verfahrensschritten und örtlich außerhalb des Systems stattfinden. Auf diese Weise erübrigt sich eine weitere Authentifizierung beim Platzieren eines Druckauftrags am Drucker. Dadurch können kostspielige Authentifizierungsgeräte, wie z. B. Magnetkartenleser, an den einzelnen Druckern des Systems eingespart werden.

Voraussetzung für das erfindungsgemäße System und Verfahren ist es, dass ein Nutzer des mobilen Geräts, der zu einem Benutzerkreis gehört, von der Organisation im lokalen Netzwerk, bspw. LAN, angemeldet sein kann, und dass diese Anmeldung als sicher und vertrauenswürdig angesehen werden darf.

Erfindungsgemäß weist jeder Drucker des Systems ein im System individuelles Erkennungsmerkmal, beispielsweise einen Barcode, auf. Der Barcode beinhaltet bestimmte Daten über den Drucker und den dazugehörigen Druckerserver, auf dem die Druckaufträge zwischengespeichert sind. Insbesondere beinhaltet der Barcode Informationen, die mit der Identifikationsscannung des Druckers verknüpft sind. Außerdem kann das Erkennungsmerkmal weitere Informationen über den Drucker enthalten, beispielsweise ob dieser ein Farbdrucker ist, 2-seitig (Duplex) drucken kann, welche maximale Seitenanzahl gedruckt werden kann, etc.. Die im Barcode enthaltenen Informationen und Daten können wenigstens teilweise verschlüsselt sein.

Vorzugsweise enthält das Erkennungsmerkmal Informationen betreffend die Identität des Druckers, insbesondere in verschlüsselter Form.

Das Erkennungsmerkmal kann als Barcode oder als Abwandlung eines Barcodes, z.B. dreidimensional, ausgebildet sein. Andere, in der Regel passive Elemente wie ein Chip, aber auch aktive Elemente, wie z.B. Bluetooth Aufkleber, sind ebenfalls als Erkennungsmerkmal denkbar.

Das mobile Gerät, bspw. ein Smartphone, Tablet oder iPad, das netzwerkfähig sein muss, weist insbesondere ein Programm zur Entschlüsselung aller oder einzelner (z.B. serverbezogener) im Erkennungsmerkmal enthaltenen Informationen auf.

Das mobile Gerät kann zudem Mittel zur Erzeugung eines Signals aufweisen, das Daten enthält, die dem Server Rückschlüsse auf die Identität des mobilen Geräts und auf die Identität eines Druckers, dessen Erkennungsmerkmal vom mobilen Gerät eingelesen wurde, erlaubt. Auf diese Weise wird zugleich eine Authentifizierung des Nutzers als auch eine Erkennung des vom Benutzer ausgewählten Zieldruckers bewerkstelligt.

Der Server weist vorzugsweise Mittel zur Authentifizierung des Benutzers eines der mobilen Geräte und/oder Mittel zur Verifizierung der Berechtigung des Benutzers zum Ausdrucken bestimmter Druckanfragen auf, als auch Mittel zur Entschlüsselung der Druckerindentität des vom Anwender ausgewählten Druckers.

In einem speziellen Ausführungsbeispiel können mehrere Systeme wie oben beschrieben ein übergeordnetes System bilden. D.h. Gruppen von Druckern sind unterschiedlichen Servern des übergeordneten Systems zugeordnet. Auf diese Weise können Berechtigungen einzelner Nutzer gezielt für bestimmte Gruppen von Druckern vergeben werden.

Das erfindungsgemäße Verfahren zum Drucken einer Datei, insbesondere in einem System nach wie oben beschrieben, umfasst die Schritte: (S1) Übermittlung einer Druckanfrage an einen Server von einem ersten Gerät und Abspeichern dieser Druckanfrage; (S3) Erfassen und Verarbeiten eines individuellen Erkennungsmerkmals eines der Drucker durch ein zweites mobiles Gerät; und (S4) Weiterleiten eines Signals, das vorzugsweise verschlüsselte Identifikationsdaten des Druckers und Identifikationsdaten des mobilen Geräts enthält, an den Server.

Beim erfindungsgemäßen Verfahren scannen Anwender, die einen Druckauftrag platzieren wollen, mit dem mobilen Gerät und mithilfe eines dazu geeigneten Programms das am Drucker angebrachte Erkennungsmerkmal (z. B. Barcode) und entschlüsselt zumindest die serverbezogenen Daten, die dazu dienen, den Server zu ermitteln. Die druckerbezogenen Daten können nach dem Schritt S4 auf dem Server entschlüsselt werden. Anschließend nimmt das Programm, welches beispielsweise in einem Speicher des mobilen Geräts abgespeichert ist, Kontakt mit dem Server auf, auf dem Druckaufträge bzw. Druckanfragen im Sinn gespeicherter und vorbereiteter, aber noch nicht aktivierter Druckaufträge zwischengespeichert sind und übermittelt ein Signal, das die Identifikation des Druckers erlaubt. Außerdem enthält das Signal die Identifikation des mobilen Geräts, mit dem das Erkennungsmerkmal (Barcode) des Druckers eingelesen wurde.

Anschließend entschlüsselt der Server ggf die vom mobilen Gerät übermittelten Daten, identifiziert und verifiziert anschließend sowohl den Drucker als auch das mobile Gerät. Falls die übermittelten Daten als vertrauenswürdig eingestuft werden, wird der Druckauftrag durch den Server an den zum Erkennungsmerkmal gehörenden Drucker übermittelt und dort ausgeführt.

Das Verfahren kann einen weiteren Schritt (S5) aufweisen, in dem die Identifikationsdaten des Druckers und die Identifikationsdaten des mobilen Geräts überprüft und die Berechtigung für einen Druckauftrag betreffend eine im Schritt (S1) abgespeicherte Druckanfrage überprüft wird.

Sind die Daten vertrauenswürdig, so wird zwischen folgenden Situationen unterschieden:
Situation 1: Der Anwender hat die Druckanfrage von dem mobilen Gerät aus erzeugt, mit dem er im Schritt (S3) den Barcode eingelesen hat.

In diesem Fall können die Druckaufträge automatisch identifiziert, dem Anwender zugeordnet und am ausgewählten Drucker ausgedruckt werden. Zusätzlich kann eine Sicherheitsabfrage, z.B. über eine mehrstellige Nummer, erfolgen. In diesem Fall startet auf dem mobilen Gerät des Anwenders der WEB-Browser und verbindet sich automatisch mit einem Intranet-Portal des Druckerservers, wo seine PIN abgefragt und verifiziert wird.

Im Weiteren besteht auch - je nach Konfiguration - die Möglichkeit, dem Anwender über den WEB-Browser oder ein anderes Kommunikationsprogramm eine Wahlmöglichkeit zum Löschen oder Drucken einzublenden. Andere Einstellungen für den Druckauftrag können in einer speziellen Ausführungsform ebenfalls angeboten werden.

Situation 2: Der Anwender hat die Druckaufträge von einem anderen Endgerät aus erzeugt (z. B. PC), als dem mobilen Gerät, mit dem er den Barcode des ausgewählten Druckers eingelesen hat.

Die Berechtigung, für bestimmte Druckanfragen einen Druckauftrag zu platzieren, können identifiziert und am ausgewählten Drucker durchgeführt werden, indem das mobile Gerät, mit dem der Anwender über das Einscannen des Barcodes Druckaufträge anfordert, vorher im Server registriert und dem Netzwerkbenutzernamen des Anwenders zugeordnet wurde. Die Druckanfrage, die mit dem Netzwerkbenutzernamen verknüpft ist, kann über eine Überprüfung der Relation der Gerätekennung zum Netzwerkbenutzernamen mit dem Druckauftrag des Benutzers verglichen werden. Eine Ausführung erfolgt nur bei Konkordanz des hinterlegten Netzwerkbenutzernamens mit der übermittelten Gerätekennung.

Das Verfahren kann einen weiteren Schritt (S6) aufweisen, in dem ein Druckauftrag an den im Schritt (S3) gewählten Drucker zu einer im Schritt (S1) abgespeicherten Druckanfrage übermittelt wird.

Das im Schritt (S3) erfasste Erkennungsmerkmal ist insbesondere für jeden Drucker des Systems einzigartig. Auf diese Weise ist eine eindeutige Identifikation des Druckers möglich, dessen Erkennungsmerkmal vom mobilen Gerät eingelesen und an den Server übermittelt wurde.

Das im Schritt (S3) erfasste Erkennungsmerkmal enthält vorzugsweise verschlüsselte Informationen betreffend die Identität des Druckers.

Das im Schritt (S4) weitergeleitete Signal kann insbesondere verschlüsselte Informationen zur Identifikation des Druckers enthalten, dessen Identifikationsmerkmal erfasst wurde. Ein Druckauftrag wird an diesen Drucker übermittelt.

Das erste Gerät und das mobile Gerät können in einer Variante des Verfahrens identisch sein und die Berechtigung eines Benutzers des mobilen Geräts zum Ausdrucken einer im Schritt gespeicherten Druckanfrage kann durch den Vergleich der Identität des Auftraggebers der Druckanfrage und des Druckauftrags ermittelt werden.

Das erste Gerät und das mobile Gerät können in einer anderen Variante des Verfahrens nicht identisch sein und die Berechtigung eines Benutzers des mobilen Geräts zum Ausdrucken einer im Schritt (S1) gespeicherten Druckanfrage kann durch die Überprüfung einer hinterlegten Zuordnung des Netzwerkbenutzernamens des Auftraggebers der Druckanfrage und der Identität des mobilen Geräts des Auftraggebers des Druckauftrags ermittelt werden.

Ein erfindungsgemäßes Datenverarbeitungsprogramm, insbesondere zur Durchführung eines Verfahrens wie beschrieben, weist ein erstes in einem mobilen Gerät gespeichertes Modul und ein in einem Server gespeichertes zweites Modul auf, wobei das erste Modul ein Erkennungsmerkmal eines Druckers ausliest und vorzugsweise teilweise (Serverbezogene Daten) entschlüsselt, und ein Signal enthaltend vorzugsweise verschlüsselte Identifikationsdaten des Druckers und des mobilen Geräts an den Server versendet, und das zweite Modul dieses Signal empfängt und nach der Entschlüsselung der übermittelten Daten eine Überprüfung der Berechtigung des Auftraggebers des Druckauftrags und eine Identifikation des ausgewählten Druckers vornimmt und, sofern die Berechtigung des Auftraggebers festgestellt wird, an diesen Drucker der Druckauftrag übermittelt wird.

Im Unterschied zu bekannten Verfahren, die eine Authentifizierung direkt am Drucker durchführen, kommt die beschriebene Lösung ohne zusätzliche, wartungsbedürftige Komponenten am Drucker aus.

Durch das Programm wird das mobile Gerät vom Druckerserver authentifiziert und verifiziert. Zudem wird der Zieldrucker von Druckerserver erkannt und verifiziert.

Alle Merkmale und Eigenschaften, die im Zusammenhang mit dem System bzw. Netzwerk, dem Verfahren oder dem Datenverarbeitungsprogramm beschrieben wurden, werden auch auf im Zusammenhang mit den jeweils anderen Gegenstände bzw. Verfahren beansprucht.

### KURZE BESCHREIBUNG DER FIGUREN

Weitere Merkmale und Vorteile der Erfindung ergeben sich aus der nachfolgenden Beschreibung eines bevorzugten Ausführungsbeispiels anhand der Figuren. Es zeigen:
- Figur 1: Eine schematische Darstellung des erfindungsgemäßen Systems; und
- Figur 2: Einen schematischen Prozessablauf gemäß der vorliegenden Erfindung.

### BESCHREIBUNG EINES BEVORZUGTEN AUSFÜHRUNGSBEISPIELS

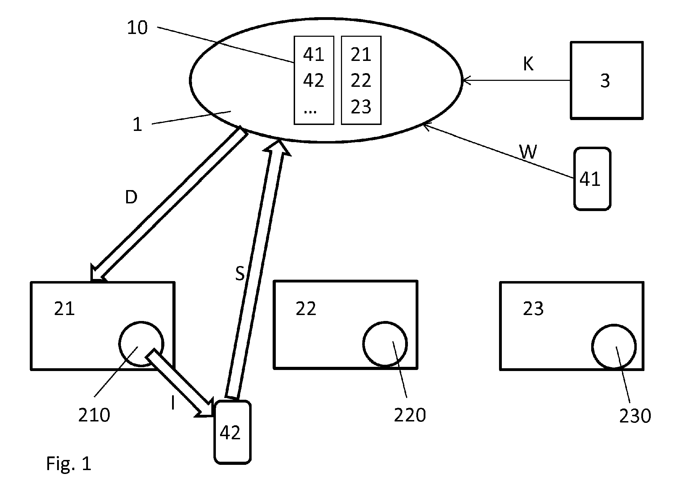

Die Figur 1 zeigt ein System bzw. ein Netzwerk gemäß der vorliegenden Erfindung.

Das System bzw. Netzwerk umfasst einen Server 1 sowie eine Vielzahl von Druckern 21, 22, 23. Außerdem ist beispielhaft ein Rechner 3 dargestellt, der mit dem Server 1 über Kabel und/oder kabellos Daten austauschen kann. Das dargestellte Netzwerk umfasst außerdem zwei mobile netzwerkwerkfähige Geräte 41, 42, im vorliegenden Fall Kommunikationsgeräte wie Mobiltelefone bzw. Smartphones, mit einer kabellosen Zugriffsmöglichkeit W auf das Netzwerk, z.B. über Wireless LAN (W-LAN). Die Anzahl der im Netzwerk vorhandenen Drucker, Rechner und mobilen Einheiten ist selbstverständlich variabel und praktisch beliebig. Es können auch mehrere Druckerserver vorhanden sein, durch die unterschiedliche Gruppen von Druckern verwaltet werden. Drucker 21, 22, 23 und mobile Geräte 41, 42 weisen jeweils im Netzwerk einmalige Indentifikationen, beispielsweise in Form von Identifikationsnummern oder Adressen, auf.

Jeder der Drucker 21, 22, 23 weist erfindungsgemäß ein im Netzwerk 1 individuelles Erkennungsmerkmal 210, 220 bzw. 230 auf, der von den registrierten mobilen Geräten (im Beispiel Gerät 42) erfasst werden kann. So können die Erkennungsmerkmale 210, 220 bzw. 230 unterschiedliche Barcodes sein, die vom zweiten mobilen Gerät 42 mittels eines geeigneten Programms und/oder Sensors eingelesen werden können. Die Erkennungsmerkmale 210, 220 und 230 sind auf eindeutige Weise den Identifikationen der Drucker 21, 22 bzw. 23 zugeordnet. Insbesondere sind die Erkennungsmerkmale passive Elemente wie Barcodes, Strichcodes, RFID-Chips, o.ä. oder auch aktive Elemente, wie z.B. Bluetooth Aufkleber.

Der Server 1 weist eine Datenbank bzw. einen Speicher 10 auf, in dem die Identifikationen der Drucker 21, 22, 23 als auch die Identifikationen der mobilen Kommunikationsgeräte 41, 42 hinterlegt sind. Der Server 1 kann sowohl vom Rechner 3 als auch von einem der mobilen Gerät e (hier 41) eine Anfrage K bzw. W zum Drucken einer bestimmten Datei annehmen und abspeichern. Diese Druckanfragen sind keinem Drucker zugeordnet und werden dementsprechend nicht unmittelbar ausgeführt, sondern abgespeichert. In den Druckanfragen können bereits Druckparameter und -optionen, wie Farbdruck ja/nein, beidseitiger Druck ja/nein, etc., enthalten sein.

Der tatsächliche Druckauftrag D, mit dem das Drucken einer Druckanfrage auf einem bestimmten Drucker 21, 22 oder 23 angestoßen wird, erfolgt, indem das zweite mobile Gerät 42, in dem ein bestimmter Benutzer beispielsweise mittels Kennung und Passwort angemeldet ist, das Erkennungsmerkmal, im Bespiel das Erkennungsmerkmal 210 des Druckers 21, als Signal I erfasst und verarbeitet, beispielsweise entschlüsselt und/oder umwandelt. Die Erfassung des Erkennungsmerkmals 210 durch das mobile Gerät 42 und die Verarbeitung im zweiten mobilen Gerät 42 werden durch einen Sensor und ein im Gerät 42 gespeichertes Programm durchgeführt. Anschließend nimmt das mobile Gerät 42 im Netzwerk Kontakt mit dem für den Drucker 21 zuständigen Server 1 auf und übersendet ein Signal S. Vor dem Übersenden des Signals S an den Server 1 kann das Programm die Möglichkeit bieten, weitere Auswahlkriterien betreffend den Druckauftrag anzubieten, beispielsweise die Druckqualität einzustellen, Ein-/Zweiseitendruck zu wählen, Farbe/schwarz-weiß zu wählen, etc.. Informationen über wählbare Druckoptionen können im Erkennungsmerkmal des Druckers übermittelt werden, so dass nur tatsächlich vorhandene Optionen auswählbar sind (z.B. macht die Auswahl Farbe/Monochrom nur bei einem Farbdrucker Sinn). Anschließend wird das Signal S, das Identifikationssignale des Druckers 21 und des Geräts 42 sowie ggf. die eingestellten Optionen enthält, an den Server 1 übermittelt. Im Weiteren besteht auch - je nach Konfiguration - die Möglichkeit den Anwender über den WEB-Browser oder das Kommunikationsprogramm des Netzwerks eine Wahlmöglichkeit zum Löschen oder Drucken an seinem mobilen Gerät 42 zu geben.

In einer alternativen Ausführungsform können die Druckoptionen von der Funktionseinheit des Anfragenden, beispielsweise am Rechner 3 oder am ersten mobilen Gerät 41, zumindest teilweise ausgewählt werden. Das auf dem zweiten mobilen Gerät 42 geladene Programm kann dann so konfiguriert sein oder werden, dass der Druckauftrag nach Erfassung und Verarbeitung der Druckerkennung 210 ohne weiteren Eingriff des Bedieners des zweiten mobilen Kommunikationsgeräts 42 (oder lediglich durch eine Freigabe) über den Server 1 an den Drucker 21 weitergegeben wird.

Hat der Anwender den oder die Druckaufträge von demselben mobilen Gerät aus erzeugt (z.B. Gerät 42), mit dem er den Barcode 210 eingelesen hat, können die Druckaufträge automatisch identifiziert, dem Anwender zugeordnet und am ausgewählten Drucker 21 ausgedruckt werden. Bei entsprechender Einstellung kann zusätzlich noch eine Sicherheitsabfrage über eine mehrstellige Nummer erfolgen. In diesem Fall startet auf dem mobilen Gerät 42 des Anwenders der WEB-Browser oder ein Programm und verbindet sich automatisch mit einem Intranet-Portal des Druckerservers 1, wo ein Passwort des Benutzers abgefragt und verifiziert wird.

Hat der Anwender die Druckanfrage(n) von einem anderen Endgerät aus erzeugt, z. B. dem PC 3, als dem mobilen Gerät 41, mit dem er den Barcode einliest, können die Druckanfragen automatisch identifiziert und am ausgewählten Drucker ausgedruckt werden. Dazu muss jedoch das mobile Gerät 42, mit dem der Anwender über das Einscannen des Barcodes seine Druckaufträge anfordert, zuvor im Netzwerk einmalig registriert und dem Netzwerkbenutzernamen des Anwenders zugeordnet worden sein.

Das erfasste Erkennungsmerkmal 210 (Barcode) und die darin enthaltene Information, insbesondere die Identifikation des Druckers 21, ist in der Regel verschlüsselt und wird in Verbindung mit einem Signal, das ebenfalls verschlüsselt sein kann, und die Identifikation des zweiten mobilen Kommunikationsgeräts 42 wiederspiegelt, als (verschlüsseltes oder teilweise verschlüsseltes) Gesamtsignal S über ein drahtloses Netzwerk (z. B. W-LAN) an den Server 1 übermittelt. Der Server 1 wertet die erhaltenen Signale S, falls nötig nach einer Entschlüsselung, aus und stellt fest, ob sowohl die Identifikation des angeforderten Druckers 21 als auch die Identifikation des zweiten mobilen Geräts 42 hinterlegt und zulässig sind. Dabei wird vorausgesetzt, dass die Authentifizierung des Benutzers des mobilen Geräts 42, die meist beim Starten desselben erfolgt, gültig ist. Ebenso wird das dem Drucker 21 zugeordnete Identifikationssignal, das aus dem erfassten Erkennungsmerkmal-Signals 210 erzeugt wurde, als gültig eingestuft, wenn das Signal den hinterlegten Informationen entspricht. Ist dies der Fall, so wird der Druckauftrag automatisch auf dem Drucker 21 durchgeführt, beispielsweise initiiert durch einen vom Server 1 zum Drucker 21 gesendeten Druckbefehl D.

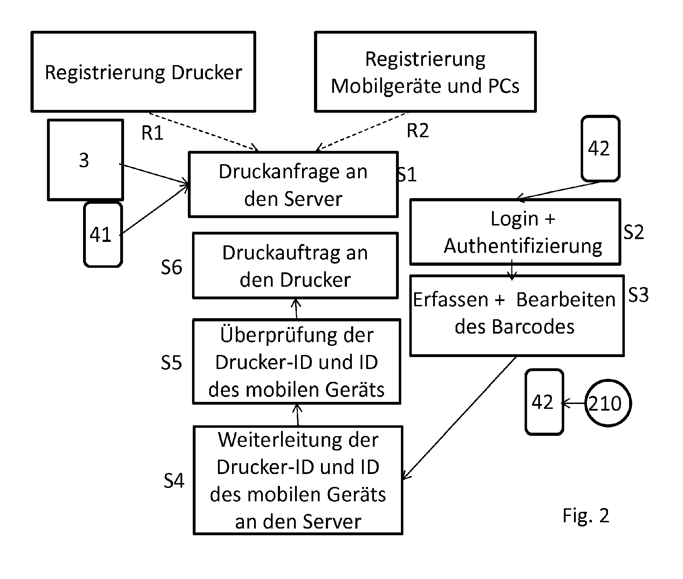

In der Figur 2 ist schematisch der Ablauf zur Durchführung eines Druckauftrags in einem Netzwerk gemäß der vorliegenden Erfindung dargestellt.

Vor der eigentlichen Durchführung des Verfahrens werden die Identifikationen der zum Netzwerk gehörenden Geräte wie Drucker 21, 22, 23,..., mobile Kommunikationsgeräte 41, 42,... und Rechner 3,..., etc. registriert und abgespeichert, beispielsweise in einer oder mehreren Datenbanken 10 (Registrierungsschritte R1 und R2). Auf die Registrierung der Drucker kann ggf. verzichtet werden, wenn die Administration die vom Drucker über das Mobilgerät übermittelten Erkennungsmerkmale als ausreichend vertrauenswürdig einstuft.

Das Verfahren im engeren Sinn beginnt in Schritt S1 mit der Übersendung einer Druckanfrage zum Drucken einer bestimmten Datei durch einen der PCs 3 oder mobilen Kommunikationsgeräte 41, 42 an den Server mittels drahtloser Übertragung oder mittels Kabelübertragung. Die Druckanfrage kann bereits eine spezielle Einstellung oder Auswahl von Druckoptionen enthalten.

Der Schritt S2 kann zeitgleich oder zeitversetzt vor oder nach dem Schritt S1 erfolgen, jedoch werden beide Schritte S1 und S2 vor dem folgenden Schritt S3 durchgeführt. Im Schritt S2 logt sich ein Benutzer in ein mobiles Kommunikationsgerät 42 ein, wobei er sich beispielsweise durch Login und Passwort oder andere Merkmale, beispielsweise biologische Merkmale wie den Fingerabdruck, authentifiziert.

Im Schritt S3 wählt der Benutzer des Systems einen Drucker 21 aus einer Vielzahl von Druckern 21, 22, 23 im System aus, um den Druckauftrag auf diesem Drucker 21 durchzuführen. Um den Zieldrucker zu identifizieren, ist dieser mit einem Erkennungsmerkmal ausgestattet, beispielsweise einem Barcode 210, und das mobile Gerät 42 ist mit einer Erfassungs- und Auswertungsfunktion zur Bestimmung des Barcodes 210 bzw. des mit ihm verknüpften Inhalts ausgestattet. Der Barcode 210 kann verschlüsselt sein. Im Programmspeicher des mobilen Geräts 42 ist ein Programm hinterlegt, das eine Erfassung/Erkennung des Barcodes 210 und eine nachfolgende Bearbeitung, z. B. eine Entschlüsselung bzw. Teilentschlüsselung der Barcode-Daten, durchführt.

Im Schritt S4 wird ein Signal S über eine drahtlose Verbindung vom mobilen Gerät 42 an den Server weitergeleitet. Das Signal S enthält Daten, die sowohl die Identifikation des Druckers 21 als auch die Identifikation des mobilen Geräts 42, mit dem der Barcode 210 eingelesen wurde, beinhalten. Auch dieses Signal S kann verschlüsselt sein und im Server 1 entschlüsselt werden.

Außerdem prüft der Server 1, wie im Schritt S5 vorgesehen, die Berechtigung sowohl der Identifikation des Druckers als auch des mobilen Geräts. Sind sowohl die dem Drucker betreffenden Daten als auch die das mobile Gerät betreffenden Daten auf dem Server hinterlegt und erfüllen diese die erforderlichen Bedingungen, so erteilt der Server im Schritt S6 einen Druckauftrag an den ausgewählten Drucker 21 bzw. gibt die Druckanfrage als Druckauftrag frei. Anschließend wird der Druckauftrag am ausgewählten Drucker 21, dessen Barcode 210 eingelesen wurde, ausgeführt.

Bei dem erfindungsgemäßen System können die Drucker mit einem passiven Merkmal (Barcode, RFID, Chip, etc.) oder eine aktiven Merkmal (Bluetooth Aufkleber) ausgestattet sein und müssen keine Identifizierung und Authentifizierung des Benutzers, der am Drucker ausdrucken will, vornehmen. Dies ermöglicht es, durch eine einfach programmtechnische Lösung am mobilen Gerät eine Authentifizierung des Benutzers und gleichzeitig eine Identifizierung des gewünschten Druckers vorzunehmen, ohne dass am Drucker spezifische technisch aufwendige Komponenten angeschlossen oder eingebaut sein müssen.

## Patentansprüche

1. System zum Drucken einer Datei, umfassend ein Netzwerk mit wenigstens einem Server (1), wenigstens einem mobilen Gerät (41, 42), und einer Anzahl von Druckern (21, 22, 23),
**dadurch gekennzeichnet, dass**
die Drucker (21, 22, 23) jeweils ein im System individuelles Erkennungsmerkmal (210, 220, 230) aufweisen, das durch das mobile Gerät (41, 42) auslesbar ist.

2. System nach Anspruch 1,
**dadurch gekennzeichnet, dass**
das Erkennungsmerkmal (210, 220, 230) Informationen betreffend die Identität des Druckers (21, 22, 23), insbesondere in verschlüsselter Form, enthält.

3. System nach Anspruch 1 oder 2,
**dadurch gekennzeichnet, dass**
das Erkennungsmerkmal als Barcode oder ein anderes, geeignetes, passives oder aktives Element ausgebildet ist.

4. System nach einem der vorhergehenden Ansprüche,
**dadurch gekennzeichnet, dass**
das mobile Gerät (41, 42) ein Programm zur Entschlüsselung der im Erkennungsmerkmal enthaltenen Information aufweist.

5. System nach einem der vorhergehenden Ansprüche,
**dadurch gekennzeichnet, dass**
das mobile Gerät (41, 42) Mittel zur Erzeugung eines Signals aufweist, das Daten enthält, die dem Server (1) Rückschlüsse auf die Identität des mobilen Geräts (41, 42) und auf die Identität eines Druckers (21, 22, 23), dessen Erkennungsmerkmal (210, 220, 230) vom mobilen Gerät (41, 42) eingelesen wurde, erlaubt.

6. System nach einem der vorhergehenden Ansprüche,
**dadurch gekennzeichnet, dass**
der Server (1) Mittel zur Authentifizierung des Benutzers eines der mobilen Geräte (41, 42) und/oder Mittel zur Verifizierung der Berechtigung des Benutzers zum Ausdrucken bestimmter Druckanfragen aufweist.

7. Verfahren zum Drucken einer Datei, insbesondere in einem System nach einem der vorhergehenden Ansprüche, umfassend die Schritte: (S1) Übermittlung einer Druckanfrage (K, W) an einen Server (1) von einem ersten Gerät (3, 41) und Abspeichern dieser Druckanfrage; (S3) Erfassen und Verarbeiten eines individuellen Erkennungsmerkmals (210) eines der Drucker (21) durch ein zweites mobiles Gerät (42); und (S4) Weiterleiten eines Signals (S), das Identifikationsdaten des Druckers (21) und Identifikationsdaten des mobilen Geräts (42) enthält, an den Server (1).

8. Verfahren nach Anspruch 7,
**dadurch gekennzeichnet, dass**
das Verfahren einen weiteren Schritt (S5) aufweist, in dem die Identifikationsdaten des Druckers (21) und die Identifikationsdaten des mobilen Geräts (42) überprüft und die Berechtigung für einen Druckauftrag betreffend eine im Schritt (S1) abgespeicherte Druckanfrage überprüft wird.

9. Verfahren nach Anspruch 7 oder 8,
**dadurch gekennzeichnet, dass**
das Verfahren einen weiteren Schritt (S6) aufweist, in dem ein Druckauftrag an den im Schritt (S3) gewählten Drucker zu einer im Schritt (S1) abgespeicherten Druckanfrage übermittelt wird.

10. Verfahren nach einem der Ansprüche 7 bis 9,
**dadurch gekennzeichnet, dass**
das im Schritt (S3) erfasste Erkennungsmerkmal für jeden Drucker des Systems einzigartig ist.

11. Verfahren nach einem der Ansprüche 7 bis 10,
**dadurch gekennzeichnet, dass**
das im Schritt (S3) erfasste Erkennungsmerkmal verschlüsselte Informationen betreffend die Identität des Druckers enthält.

12. Verfahren nach einem der Ansprüche 7 bis 11,
**dadurch gekennzeichnet, dass**
das im Schritt (S4) weitergeleitete Signal (S) insbesondere verschlüsselte Informationen zur Identifikation des Druckers (21) enthält, dessen Identifikationsmerkmal (210) erfasst wurde, und dass ein Druckauftrag an diesen Drucker (21) übermittelt wird.

13. Verfahren nach einem der Ansprüche 7 bis 12,
**dadurch gekennzeichnet, dass**
das erste Gerät und das mobile Gerät (42) identisch sind und die Berechtigung eines Benutzers des mobilen Geräts (42) zum Ausdrucken einer im Schritt (S1) gespeicherten Druckanfrage durch den Vergleich der Identität des Auftraggebers der Druckanfrage und des Druckauftrags ermittelt wird.

14. Verfahren nach einem der Ansprüche 7 bis 12,
**dadurch gekennzeichnet, dass**
das erste Gerät (3, 41) und das mobile Gerät (42) nicht identisch sind und die Berechtigung eines Benutzers des mobilen Geräts (42) zum Ausdrucken einer im Schritt (S1) gespeicherten Druckanfrage durch die Überprüfung einer hinterlegten Zuordnung des Netzwerkbenutzernamens des Auftraggebers der Druckanfrage und der Identität des mobilen Geräts des Auftraggebers des Druckauftrags ermittelt wird.

15. Datenverarbeitungsprogramm, insbesondere zur Durchführung eines Verfahrens gemäß einem der Ansprüche 7 bis 14, wobei das Datenverarbeitungsprogramm ein erstes in einem mobilen Gerät (42) gespeichertes Modul und ein in einem Server (1) gespeichertes zweites Modul aufweist, wobei das erste Modul ein Erkennungsmerkmal (210) eines Druckers (21) ausliest und entschlüsselt, und ein Signal (S) enthaltend Identifikationsdaten des Druckers und des mobilen Geräts an den Server (1) versendet, und das zweite Modul dieses Signal (S) empfängt und eine Überprüfung der Berechtigung des Auftraggebers des Druckauftrags und eine Identifikation des ausgewählten Druckers (21) vornimmt und, sofern die Berechtigung des Auftraggebers festgestellt wird, an diesen Drucker (21) der Druckauftrag übermittelt wird.
